# EUROPEAN PATENT APPLICATION

(11) **EP 3 091 497 A1**
(43) Date of publication of application: **09.11.2016**
(21) Application number: 16166381.0
(22) Date of filing: 21.04.2016
(51) Int. Cl.: G06Q 30/06, G06Q 30/02

(54) **RECOMMENDATION SYSTEM AND METHOD FOR A MOBILE DEVICE BASED ON RAW DATA WHICH IS COLLECTED FROM SENSORS OF THE MOBILE DEVICE**

(30) Priority: 07.05.2015 IL 23869715
(71) Applicant: Deutsche Telekom AG, 53113 Bonn (DE)
(72) Inventor: Shapira, Bracha, 84728 Beer Sheva (IL); Rokach, Lior, Omer (IL); Bar, Ariel, Ashdod (IL); Unger, Moshe, Ramat Gan (IL); Chizi, Barak, Ashkelon 7828101 (IL)
(74) Representative: Hoeger, Stellrecht & Partner Patentanwälte mbB

(57) **Abstract**

The present invention refers to a recommendation system which comprises:
e. extracting unit at a user mobile device for extracting latent raw sensors data from one or more sensors of the mobile device;
f. communication means for conveying said latent raw sensors data, optionally together with passive data, to a query formation module at a remote server;
g. said query formation module at the remote server for forming a query from said latent raw sensors data, and optionally also from said passive data and from a user profile data, if exists within said query formation module, and conveying the query into a recommender at said remote server;
h. said recommender at the remote location for: (i) receiving said query from said query formation module; (ii) processing said query against a general model and a recommendation library, to obtain a product recommendation R; and (iii) conveying said product recommendation R to the user mobile device.

## Description

### Field of Invention

The invention relates in general to the field of mobile applications. More specifically, the invention relates to a recommendation system and method which uses, among others, data from sensors of the mobile-device to form a product-recommendation to the user.

### Background of the Invention

Recommendation systems are well known and widely used in the field of mobile devices. Typically, all the recommendation systems use at least the profile of the specific user (as far as this profile is available), together with the context that he is presently in (as far as the context is available or can be inferred) in order to recommend to the user a product that he will most likely be willing to purchase. Each of such a recommendation system has its own "engine" (algorithm, etc.) for processing and for carrying out this task.

The most basic recommendation system of the prior art uses "passive" data inferred from the user's device in order to form the recommendation. More specifically, the recommendation server may form the recommendation based on the best available user profile and context, however, without requiring from the user to be "active", namely, the user is not required to actively provide any specific details relating to the context he is currently in. For example, upon access by the user of a cinema website, the basic recommendation system determines a movie which it finds to best suit the user's interest. As noted, this is done based on a "passive" profile of the user - sometimes a profile which is based on historic activities of the user, and available offline, and the context (i.e., knowledge, for example, that he has accessed a cinema website, etc.). The user, in turn, is not required to indicate in the basic system whether he will come to the cinema alone, together with his girlfriend, or with his 10-years old daughter. Clearly, such knowledge could have improved the recommendation, but in the basic recommendation system this knowledge is unavailable.

A more advanced recommendation system requires the user to be "active", in order to improve the recommendation. In such a case, for example, the user may be required in the example above to indicate one or more of: his age, whether he plans to come alone or accompanied by somebody, and the accompanied person's age, etc. Upon having such "active" context data, the recommendation is significantly improved, as the addition of accurate context data contributes to the accuracy of the recommendation results.

Although both of said "basic" and "more advanced" ("active") recommendation systems are workable and applied in systems of the prior art, they still suffer from some drawbacks. The "basic" recommendation system has a relatively low rate of success, as it lacks the real and accurate context data, such as in the example above: who is the accompanying person, what is his age - this information only the user himself can "actively" provide. The "more advanced" recommendation system, in turn, is problematic, as it requires the user to be active, and not less important, it requires from him to disclose private data, an action that many people try to avoid.

As shown, both said "basic" and "more advanced" recommendation systems suffer from drawbacks.

It is therefore an object of the present invention to provide a recommendation system which provides more accurate recommendations compared to said "basic" recommendation system, while not requiring the user to disclose any private data, either actively or inactively.

It is still another object of the present invention to provide a recommendation system which in fact inferences about the user "general" context, while not disclosing any of his private specific data.

Other objects and advantages of the present invention will become apparent as the description proceeds.

### Summary of the Invention

The invention relates to a recommendation system which comprises: (a) extracting unit at a user mobile device for extracting latent raw sensors data from one or more sensors of the mobile device; (b) communication means for conveying said latent raw sensors data, optionally together with passive data, to a query formation module at a remote server; (c) said query formation module at the remote server for forming a query from said latent raw sensors data, and optionally also from said passive data and from a user profile data, if exists within said query formation module, and conveying the query into a recommender; (d) a recommender for: (i) receiving said query from said query formation module; (ii) processing said query against a general model and a recommendation library, to obtain a product recommendation R; and (iii) conveying said recommendation R to the mobile phone of the user.

Preferably, the system further comprises a feature extraction unit for extracting predefined features from said raw data.

Preferably, said raw data is latent in the sense that it never discloses any private information of the user, therefore any raw data which is conveyed to the remote query formation module is not used to obtain private information about the user.

Preferably, said raw data is selected from one or more of
a. GPS coordinates;
b. Time of a day;
c. Time of a week;
d. Ringer mode of the device;
e. Speed of the device;
f. Battery level;
g. Activity recognition;
h. Samples the noise level around the device;
i. The ambient light level;
j. The accelerometer raw recordings;
k. Rotation state of the device;
l. Gyroscope measures;
m. Number of neighborhood WiFi modems;
n. Number of incoming and outgoing recent calls;
o. The number of incoming and outgoing SMSs;
p. Number of running applications.

### Brief Description of the Drawings

In the drawings:
- Fig. 1 shows the general structure of a "basic" recommendation system, according to the prior art;
- Fig. 2 shows a "more advanced" recommendation system according to the prior art;
- Fig. 3 shows a recommendation system according to the present invention; and
- Fig. 4 illustrates in a flow diagram form a recommendation process as performed according to one embodiment of the invention.

### Detailed Description of Preferred Embodiments

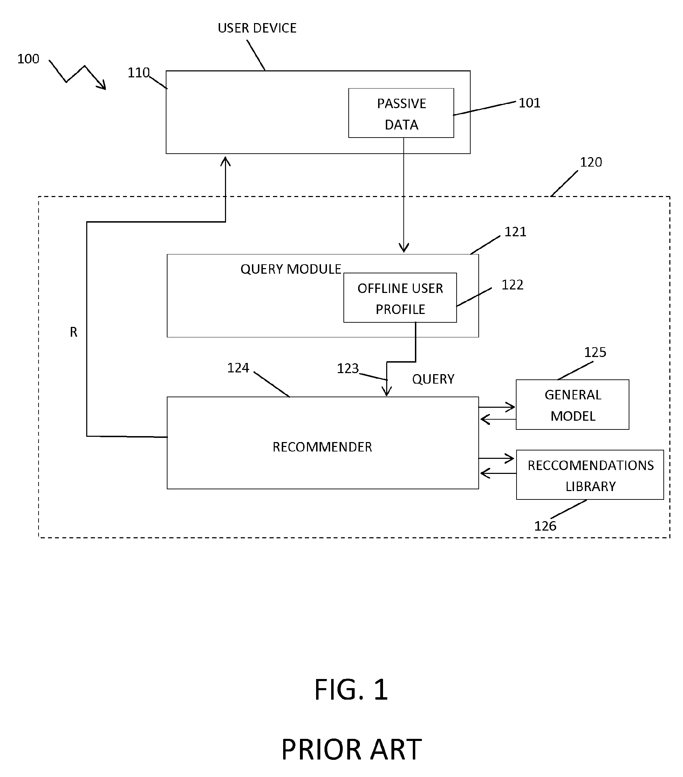

Fig. 1 shows the general structure of a "basic" recommendation system 100, according to the prior art. Passive data 101 (i.e., data which does not require the user to actively provide specific information) is conveyed from the mobile device 110 to a query formation module 121 at the recommendation server 120. The passive data may be, for example, an indication (such as name or type) with respect the site to which the user has accessed (for example, the name of the cinema, or its type, or in another example, the name of a toys store, or its type "toys"). The query formation module 121 may use historic user profile data 122 with respect to the user to form a query 123. The query 123 is submitted to a recommender 124. The recommender 124 accepts the query 123, and processes the query to form a recommendation R. More specifically, the recommender 124 analyses query 124 against a general model 125, and a recommendation library 126, to issue said recommendation R. The general model 125 contains pluralities of sets of general parameters to be evaluated against the query which contains specific data relating to the user and his current situation. The result of said evaluation is submitted to the recommendation library 125, which contains pluralities of products, to thereby select the one product R which is most likely to be attractive for to user. The product R is conveyed to the mobile device 110, and offered to the user for purchase.

It should be noted that the query formation module 122 may not contain the offline user profile 122 (such as his age, gender, previous purchases, etc.), as such user profile information (or a portion thereof) may be obtained or inferred on-line from the user's device. The general model, which generally contains sets of parameters, is a unit well known in the art, and there are many types of models that are used in prior art recommendation systems, depending on well-known considerations.

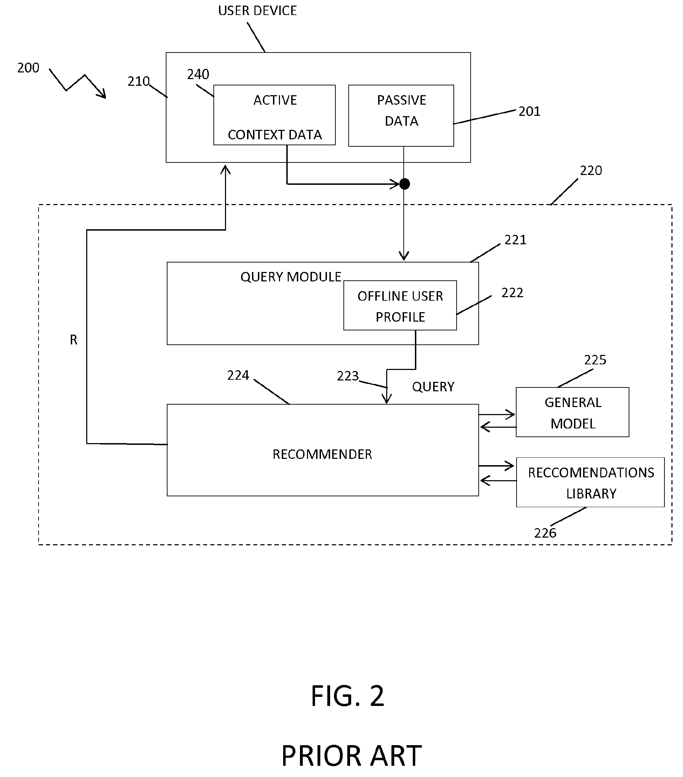

Fig. 2 shows a "more advanced" recommendation system according to the prior art. The functionality of the "more advanced" recommendation system is similar to the functionality of the "basic" prior art system of Fig. 1, and therefore, for the sake of brevity the following description will not repeat on those similar elements, but will focus only on the differences between these "basic" and "more advanced" systems. In the "more advanced" system of Fig. 2 the user is active in the sense that he actively submits specific context data 240. The active context data better defines the specific context in which the user is currently in. For example, if the user plans to come to the movie with his girlfriend, the user submits this data as an "active" context data. Alternatively, if the user plans to come to the movie with his 10-year old daughter, he will indicate this data. Obviously, this specific "active" context data enables the recommendation system to find a product R which better suits the user and the context he is in relative to the "basic" recommendation system in which this context data is not available. For example, knowing that the user comes to the cinema with his 10-years old daughter will lead the recommender 224 to offer a "family" or "youth" type of movie, rather than an action or romantic type of movie (or similar), which may otherwise be offered to the user in a situation of not knowing the context.

Clearly, the general model 225 of the "more advanced" system of Fig. 2 is designed to consider said active context data 240, which in the system of Fig. 1 is not available.

As said, the "more advanced" system of Fig. 2 suffers from two main drawbacks: (a) It requires the user to actively provide context data, an action that many users prefer to avoid; and (b) The context data is considered as private by many users, and this is another reason why users prefer not to submit context data.

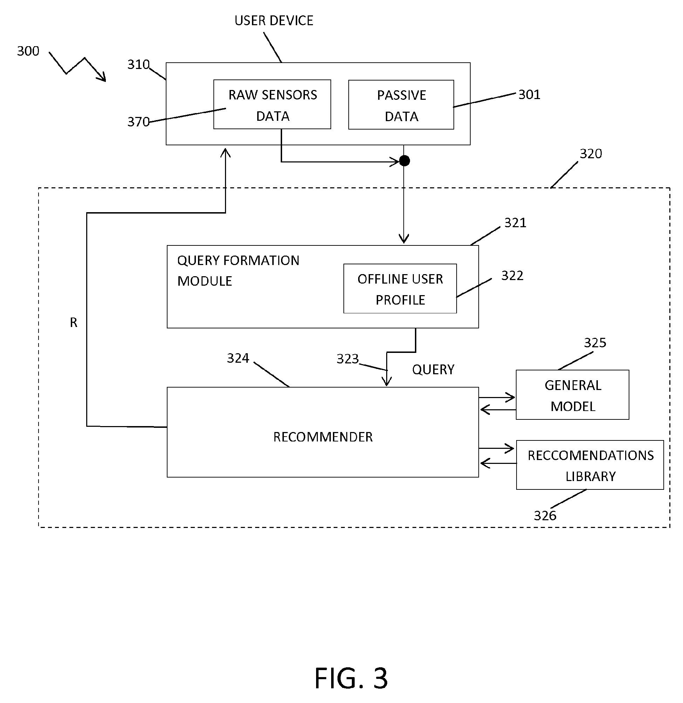

Fig. 3 shows the recommendation system 300 according to the present invention, which overcomes said drawbacks of the "more advanced" system of Fig. 2. As will be described in more details, the recommendation system of the present invention utilizes raw data as accumulated by sensors at the mobile device in order to improve the prior art "basic" recommendation system of Fig. 1, rather than requiring the user to actively submit context data as in the prior art system of Fig. 2.

With reference to Fig. 3, passive data 101 (i.e., data which does not require the user to actively provide specific information), as well as raw sensors data 370 as accumulated from one or more sensors of the mobile device is conveyed from the mobile device 310 to a query formation module 321 at the recommendation server 320. As before, the passive data may be, for example, an indication (such as name or type) with respect the site to which the user has accessed (for example, in the case of accessing a cinema website, the name of a cinema, or its type, or in another example, the name of a toys store, or its type "toys").

The raw sensors data is typically raw data which is accumulated from sensors within the mobile device 310. As is well known, modern mobile devices, such as smartphone, comprise plurality of sensors, such as microphone, accelerometers, camera, light sensors, detector with respect to available Wi-Fi modems, thermometer, and more. Each of said sensors, when used by a specific mobile application, discloses private data. However, it has been found by the inventors that when data from the sensors is considered as raw data in a manner isolated from any specific mobile application, this raw data can improve the recommendation. For example, data from the microphone, when used in conjunction with a recording application, may disclose private data, as it records specific voices. However, if this data is taken as an average DC level during, for example, 1 minute, this can hint to the type of area in which the user is located, for example, a highly populated area, alone at home, in nature, etc., while not disclosing any private data Data from the light sensor, when used, may hint as to whether the user is located within a highly lighted room, or within a dark room or area, and this may hint to the general light context that the user is in, but not specifically to anything else. In any case, the invention preferably uses raw data from plurality of sensors, while optionally processing them, and optionally giving each of them a relative weight with respect to the others. As will be demonstrated hereinafter, the inventors have found that the invention provides results that are significantly better compared to the "basic" recommendation system, while not requiring from the user to be active or to disclose any private data. A more detailed list of the sensors that the invention can use provided hereinafter.

The query formation module 321 uses the passive data 301, as well as the raw sensors data 370, to form the query 323. As in the systems of the prior art, The query formation module may also use historic user profile data 322 when forming query 323. The query 323 is submitted to a recommender 324. The recommender 324 accepts the query 323, and processes the query to form a recommendation R. More specifically, the recommender 324 analyses query 324 against a general model 325, and a recommendation library 326, to issue said recommendation R. The general model 325 contains pluralities of sets of general parameters to be evaluated against the query which contains specific data relating to the user and his current situation, as inferred from the passive data 301, from the historic profile 322, and from the raw sensors data 370. The result of said evaluation is submitted to the recommendation library 326, which contains pluralities of products, thereby to select the one product R which is most likely to be suitable for to user. The product R is conveyed to the mobile device 310, and offered to the user for purchase (in some cases, more than one suitable product are offered).

As mentioned with respect to the prior art systems of Figs. 1 and 2, it should be noted that the query formation module 321 may not contain the offline user profile 322 (such as the user age, gender, his previous purchases, etc.), as such user profile information (or a portion thereof) may be obtained or inferred on-line from the user's device. The general model 325, which generally contains sets of parameters, is built in such a manner as to handle the query 323, which in the case of the invention has a modified form, i.e., it has a portion which, as mentioned, considers the raw sensors data 370. The model itself is built also to consider said additional query portion which is in turn formed while considering the raw sensors data 370.

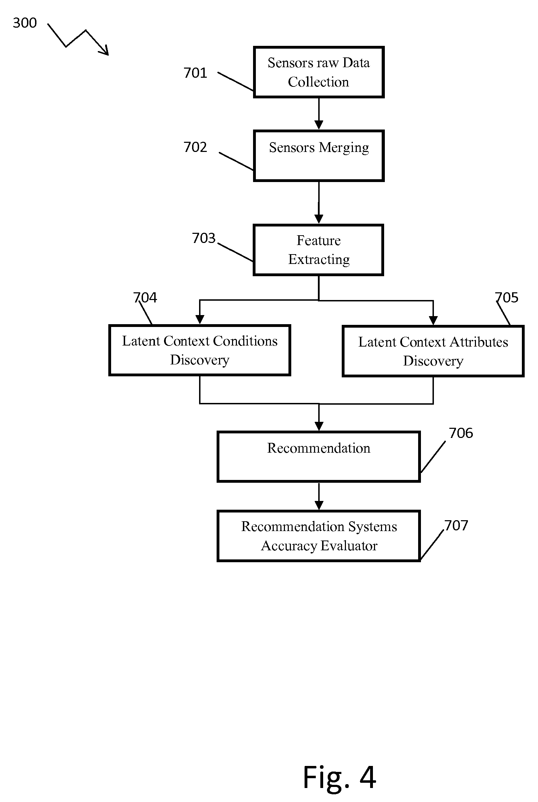

Fig. 4 illustrates in a flow diagram form a recommendation process 700 as performed according to one embodiment of the invention. The process ignores the conventional portions of the process (i.e., those performed by prior art processes) and focuses only on the novel issues. In step 701, a collection step of raw data from plurality of sensors is performed within the mobile phone, to form the raw sensors data 370 of Fig. 3. Each sensor can be collected independently according to a scheduled frequency or as a result of ad-hoc triggers. In step 702, the most recent raw data as collected from plurality of sensors is merged (within the query formation module 321), in order to derive a full sensor based status of the user. In step 703, the raw sensors data is manipulated and transformed into a set of features (the feature will be elaborated hereinafter). Next, in step 703, and according to the features as extracted, two types of latent contexts are produced: latent context conditions 704, and latent context attributes 705. These two types of contexts will be discussed hereinafter. The extracted latent context conditions and latent context attributes are used by the query formation module 321 to form the recommendation query 323, which is conveyed to the recommender 324.

The Sensors Raw Data Collection step 701 is performed by monitoring the status of various types of sensors within the mobile device (such as a mobile phone, wearable device, tablet, etc.). Examples for possible sensors that can be used according to the invention is provided hereinafter. The collection of the raw data may be performed at a selected frequency, for example, once every 5 minutes, or as a result of an event or a trigger (for example, upon completion of sending an SMS). Preferably, the raw data collection from each sensor or a group of sensors is performed based on a collection strategy which is independent from the collection strategy of other sensors. For example, a raw data collection from a GPS sensor may be performed once every 1 minute, and from the WiFi sensor and from the microphone (voltage level) the raw data may be collected once every 10 minutes. The raw data collection from the SMS sensor may be triggered upon completion of sending or upon receipt of SMS.

The Sensors Raw Data Merging step 702 matches and merges the latest and most recent sensor records, to form a unified data structure that represents the current status of the user. For example, in the merging step 702 the latest GPS location coordinates may be merged with a list of the number of WiFi networks and their mac addresses as scanned and detected. Furthermore, the GPS coordinates, when used, are never crossed with true location data (from a map) in order to keep the privacy of the user. It should be noted, however, that although the GPS coordinates are never used in connection with a true map location, still the use of the GPS coordinates as raw sensors data is optional, and it is up to the user whether to allow or not to allow use of these coordinates by the recommendation system of the invention. The merging as performed in step 702 is necessary, since the raw data collection from each of the sensors is performed based on a unique data collection strategy.

The feature extraction step 703 extracts various types of features from the merged raw sensors data as performed in step 702. The feature extraction process depends on the sensor type includes, but is not limited to the flowing data manipulation:
- Data aggregation of previously collected sensor records.
- Normalization.
- Calculation of different types of statistical measures: average, mean, variance, standard deviation, minimum, maximum, range, correlation, percentile analysis, energy, entropy etc.;
- Time series analysis for identifying trends;
- Fourier Transformations on time series;
- Distribution analysis for nominal and numeric values;
- Rule based extraction of features on the raw sensors data;
- Applying of external services that may enhance the current data (e.g.: a weather forecast service which receives GPS coordinates and returns the current weather in the area).

The Latent Context Conditions Discovery step 704 applies pre-trained unsupervised models in order to infer latent condition contexts from the extracted sensors' features. The latent context conditions are a series of categorical and latent factors, where each factor indicates that the user is at a certain condition or status without identifying explicitly his exact context (this is important in order to maintain the user privacy). These latent contexts are correlated with actual and common real-world contexts (within the general model 325 of Fig. 3). The latent content conditions that are used to carry out the step 704 may be derived either from records collected from a single user, or from all users in the system 320. In particular, various clustering methods (such as KMeans and EM - Expectation Maximization Clustering) may be applied to derive latent context conditions, while the associated cluster-ID represents the latent context condition. Clustering the raw sensor data in this stage does not require knowledge of the actual context of the user, therefore these contexts (the associated cluster IDs) are considered in fact as latent context conditions.

The Latent Context Attributes Discovery step 705 applies pre-trained decomposition/dimensionality reduction models in order to infer a set of latent condition attributes from the extracted features of the sensors. Latent condition attributes are numeric vectors of values which describe the relationships and patterns among the different features that were extracted. For example, Deep Leaning and PCA processes may be applied to derive latent context attributes. This process does not require any actual or explicit context to be known.

Deep Leaning using Autoencoder is a neural network that applies back-propagation, setting the target values to be equal to the inputs. In the training phase an auto-encoder tries to learn a function *h_{W},_{b}(x)* ≈ *x,* where w and b are the weights on the network's edges. In other words, the procedure tries to learn an approximation to the identity function, so as to output *x̂* that is similar to x. In order to produce a latent context vector, it is required to activate the neural network transformation on the given raw feature data as extracted from the available sensors.

The PCA (Principal Component Analysis) is a dimensionally reduction method that uses an orthogonal transformation to convert a set of observations with possible correlated variables into a set of new uncorrelated and orthogonal features. These features are referred to as principal components, and each one of them is a linear combination of the original extracted features of the raw sensors. In order to produce the latent context vector, it is required to activate this linear combination on the extracted features.

In order to provide maximum privacy for users, only said latent context attributes and conditions are further introduced to the recommendation model in the next steps of the process. By their nature the latent contexts are obfuscated and do not disclose any private or sensitive information (like GPS coordinates) about the user.

The Recommendation step 706 queries the general model 325 and the recommendation library 326 of Fig. 3 (which is in fact a latent context aware recommendation model). The query to the model optionally includes a client's ID (target user) for the set of latent context conditions and attributes as previously formed. The response is a set of top-N recommend items for the target user as tailored to the given latent contexts and conditions. Taking a post filtering approach, it is possible to use any existing recommendation service and enhance its recommendations with latent context of the invention. In still another approach, the process of the invention may serve as a stand-alone process that fully utilizes the process as described above.

The optional Recommendation System Accuracy Evaluation step 707 is measures the performance of the recommendation system in terms of accuracy. Examples for accuracy measures are RMSE, or Recommendation Hits and Ranking Metrics.

From system architectural points of view, the Sensors Data Collection 701 is performed by a module which is located at the client's device. The other steps are preferably performed by modules that are located at the recommendation server. Alternatively, the entire system of the invention may be located at within the user device 310. It should be noted, however, that in order to enjoy advantages resulting from collaborative information from different users, the entire system, except the raw data collection module, has to be located within a recommendation server 320.

### Example

The invention was evaluated, as follows:
Raw data which was obtained from sensors of mobile devices and processed according to the present invention was analyzed, and the effects were examined with respect to the accuracy of recommendation. The contribution of the invention was demonstrated on a system that recommends points of interest (POIs), for example: restaurants, bars, cafés, entertainment centers, etc. The idea was to model the context for which the POIs are relevant and to use it in the recommendation process as described hereinabove. In order to obtain data for evaluation of the system, an Android application was developed for monitoring a user location and to recommends POIs nearby. The application displayed recommendations on the device screen allowing the user to provide feedback about them. Possible feedbacks were "like" and "dislike" or "checking in". Each time the user provided a feedback to a certain POI, the application collected raw data from the sensors and extracted features therefrom. The list of sensors and features are listed hereinafter.

Sixty undergraduate students from different faculties participated in the experiment, with said application during 4 weeks. Data was collected about 227 POIs at the town where the university is located. Overall the system recorded 7335 events (like, dislike, check-in) and respectively the same number of context data records.

In order to test the system, the recommendation accuracy of the experiment (denoted by LCMF) was compared to a state of the art recommendation system using the matrix factorization technique (denoted by MF). The accuracy of the recommendation system was measured using two metrics: root mean square error (RMSE) matrix which measured the difference between actual rating and the predicted one, and hit@1 which measured the percentages of ranked 1 recommendation (of top-10 recommendations) that the users liked. The results showed that the process according to the invention improved the RMSE and Hit@1 matrices by a factor of 6% and 12.6% respectively.

The system and method of the invention may use one or more of the following sensors and respective features that may be extracted from them. This list is given only as an example for the possible sensors and features. Other sensors and features may be used, as the invention is flexible and general enough to handle additional sensors and features:
- Location: GPS coordinates of the current location of the device (latitude and longitude values);
- Time of a day - splitting the current time into in-day intervals: morning, afternoon, evening and night);
- Time of a week - splitting the current time into in-week intervals: weekday and weekend;
- Ringer Mode - the current ringer mode of the device - a nominal variable with 3 possible values {sound, vibrate, silent};
- Speed - measurement of the speed of the device, as provided by a location probe;
- Battery - the battery level, battery temperature and battery plugged-in condition {unplugged, plugged by AC, plugged by USB}.
- Activity Recognition - an android service which detects the current physical activity of the user {still, tilting, on foot, on bicycle, in vehicle}. The sensor also provides a confidence level for the above detection. Detections may be filtered out with less than 80% confidence;
- Microphone - samples the noise level around the device, in particular in each recording, 20 samples may be collected for 10 seconds duration. The raw samples provided by the sensor are numeric values, so they were transformed to categorical values {very silent, silent, moderate, loud, and very loud}. After the transformation, the following statistics may be calculated: most dominant category-value, distribution for each category-value and entropy;
- Light - measures the ambient light level (illumination) in lx. Similar to the microphone sensors, streams of numeric values for 10 seconds, for example, may be sampled, transformed to categorical values, and the relevant statistics {dominant, distribution and entropy} may be calculated;
- Accelerometer - the accelerometer raw recordings are a stream of numeric values, measuring the acceleration of the device on three axes (X, Y and Z). This stream of values may be sampled each time for 10 seconds. The collected stream lengths are several dozens or even a few hundreds. On each stream the following statistics (per each axis) may be calculated: average, standard deviation, mean, min, max, 25^{th} percentile, 75^{th} percentile, root mean square, energy and entropy. In addition, and in order to capture the relations between the axes, a correlation between each aces pair may be calculated. A Fast Fourier Transformation on the values on each axis may be applied, and the energy and entropy statistics on the coefficients of the transformation can be calculated;
- Rotation - similar to the accelerometer sensor, the pitch, roll and skewness of the device may be measured. A similar feature extraction policy, as described for the accelerometer sensor, may be applied;
- Gyroscope - The Gyroscope measures the rotation rates of the device around the three axes. The feature extraction policy is similar to the case of the accelerometer and rotation;
- WiFi - this sensor scans the surrounding of the device and returns a list of available WiFi networks and their characteristics. As a feature extraction policy the process may select the top 20 networks with the most sampled records. If another network is available, it may be marked as "other". For each network, two features may be extracted: an indicator specifying whether the network is available and the RSS (received signal strength) value;
- Calls - collects information regarding of incoming and outgoing calls performed via the device on the last 20 minutes. This sensor only measures the number of calls, average duration, and whether he call was answered or not;
- SMS - similar to the calls sensor, the SMS measures the number of incoming and outgoing SMSs performed via the device, for example, in the last 20 minutes. For incoming messages the percentage of measures that were read by the user may be calculated.
- Running Application - This sensor lists the applications that run on the device. This information may be aggregated according to application types {web-browsing, social-networking, video-player, audio-player, games, navigation-services} and measure whether the user activated one or more of these application types, for example, in the last 20 minutes.

While some embodiments of the invention have been described by way of illustration, it will be apparent that the invention can be carried out with many modifications variations and adaptations, and with the use of numerous equivalents or alternative solutions that are within the scope of persons skilled in the art, without departing from the spirit of the invention or exceeding the scope of the claims.

## Claims

1. A recommendation system which comprises:
a. extracting unit at a user mobile device for extracting latent raw sensors data from one or more sensors of the mobile device;
b. communication means for conveying said latent raw sensors data, optionally together with passive data, to a query formation module at a remote server;
c. said query formation module at the remote server for forming a query from said latent raw sensors data, and optionally also from said passive data and from a user profile data, if exists within said query formation module, and conveying the query into a recommender at said remote server;
d. said recommender at the remote location for: (i) receiving said query from said query formation module; (ii) processing said query against a general model and a recommendation library, to obtain a product recommendation R; and (iii) conveying said product recommendation R to the user mobile device.

2. A recommendation system according to claim 1, which further comprises a feature extraction unit for extracting predefined features from said raw data.

3. A recommendation system according to claim 1, wherein said raw data is latent in the sense that it never discloses any private information of the user, therefore any raw data which is conveyed to the remote query formation module cannot be used to obtain private information about the user.

4. A recommendation system according to claim 1, wherein said raw data is selected from one or more of:
a. GPS coordinates;
b. Time of a day;
c. Time of a week;
d. Ringer mode of the device;
e. Speed of the device;
f. Battery level;
g. Activity recognition;
h. Samples the noise level around the device;
i. The ambient light level;
j. The accelerometer raw recordings;
k. Rotation state of the device;
l. Gyroscope measures;
m. Number of neighborhood WiFi modems;
n. Number of incoming and outgoing recent calls;
o. The number of incoming and outgoing SMSs;
p. Number of running applications.
